# EUROPÄISCHE PATENTSCHRIFT

(11) **EP 2 612 048 B1**
(45) Veröffentlichungstag und Bekanntmachung des Hinweises auf die Patenterteilung: **02.09.2015**
(21) Anmeldenummer: 11754357.9
(22) Anmeldetag: 02.09.2011
(51) Int. Cl.: F16C 33/10

(54) **SCHMUTZLEITNUTEN IN GESCHMIERTEN GLEITLAGERN**
DIRT GUIDE GROOVES IN LUBRICATED PLAIN BEARINGS
RAINURES-GUIDE D'IMPURETÉS DANS DES PALIERS LISSES LUBRIFIÉS

(30) Priorität: 02.09.2010 DE 102010040156
(43) Veröffentlichungstag der Anmeldung: 10.07.2013
(73) Patentinhaber: Federal-Mogul Wiesbaden GmbH, 65201 Wiesbaden (DE)
(72) Erfinder: BRESSER, Karsten, 65347 Eltville (DE); RITTMANN, Stefan, 67292 Kirchheimbolanden (DE)
(74) Vertreter: Hoffmann Eitle
(86) Internationale Anmeldenummer: PCT/EP2011/065194
(87) Internationale Veröffentlichungsnummer: WO 2012/028715

(56) Entgegenhaltungen:
- EP-A1- 2 461 055
- CA-A1- 1 183 721
- DE-A1- 2 142 031
- JP-A- 2004 060 757
- JP-U- 55 012 180
- US-A1- 2004 066 992
- US-A1- 2009 067 766

## Beschreibung

### Technisches Gebiet

Die Erfindung betrifft geschmierte Gleitlager mit zumindest einer an der Gleitfläche ausgebildeten Nut, die sich bis zu einem Rand des Lagers erstreckt und am Rand offen ist.

### Stand der Technik

Gleitflächen von Gleitlagern werden aus verschiedenen Gründen profiliert. Beispielsweise wurde in der DE 39 05 450 C2 vorgeschlagen, Gleitlager mit Nuten zu versehen, die mit weicherem Material gefüllt sind, sodass sich das härtere Material mit dem weicheren Material in der Gleitschicht abwechselt, um eine bessere Verschleißfestigkeit und Ermüdungsfestigkeit zu erzielen.

Aus der JP 355 012180 U ist ein gattungsbildendes Gleitlager bekannt.

Die GB 1,128,370 A beschreibt ein schmiermittelfreies Lager, in dem in der Gleitfläche Aussparungen in der Form von Nuten oder Taschen ausgebildet sind, um Schmutzpartikel aus dem Lager herauszubefördern. Fremdkörper, die in das Lager eindringen, werden in den Aussparungen gesammelt und in der Richtung der Drehung der Welle entlang der Flanken der Aussparungen transportiert und an den Enden des Lagers aus dem Lager herausbefördert.

Die nicht vorveröffentlichte EP 2 461 055 A1 betrifft ein Gleitlager mit einer Mittelnut, von der sich zu beiden Seiten V-förmige Nuten erstrecken.

Die DE 101 56 344 A1 beschreibt ein Lagerelement, das auf der Gleitfläche eine Ölnut aufweist, die sich in Umfangsrichtung erstreckt. Mehrere schmale Nuten sind auf der Gleitfläche mit einem bestimmten Winkel bezüglich der Drehrichtung der Welle von der Ölnut zu einer axialen Endseite der Gleitfläche ausgebildet, um Schmieröl von der Ölnut bei der Umlaufbewegung der Welle von innen zur axialen Endseite zu führen.

Gleitlager in Verbrennungsmotoren sind einer ständigen Weiterentwicklung unterworfen. In den Verbrennungsmotoren, und somit auch in den Gleitlagern, treten immer höhere Belastungen auf. Gleichzeitig wird die Baugröße der Motoren verringert. Zudem werden immer dünnflüssigere Öle zur Reibungsreduzierung eingesetzt. Dies führt zu immer geringeren Schmierfilmdicken, welche den Kontakt zwischen Lager und Welle verhindern.

Ferner ändert sich der Aufbau der Lagerschale. Blei, das sehr gute Gleiteigenschaften aufweist, wird durch andere Elemente ersetzt. Auch die Belastungsfähigkeit der Lager wird erhöht, was zu einer höheren Empfindlichkeit gegenüber Fremdeinflüssen führt. Höher belastbare Schichten sind in der Regel dünner und härter als herkömmliche, was eine geringere Einbettfähigkeit, d. h. die Fähigkeit, harte Partikel zur Verschleißminderung in der Gleitschicht einzubetten, mit sich bringt. Durch die Substitution bleihaltiger Schichten verringert sich auch die Restgleitfähigkeit einer geschädigten Schicht. Auch das Substrat bleifreier Werkstoffe ist in der Regel härter als herkömmliche Bleibronzen. Dies reduziert zudem die Einbettfähigkeit mit folglich reduzierter Betriebssicherheit der Lagerstelle. Im Falle eines Partikeleintrags wird somit die Lagerstelle stärker als bisher geschädigt, was bis zum Totalausfall des Tribosystems führen kann. Fremdpartikel können unterschiedlichen Ursprungs sein und auf unterschiedliche Weise in den Ölkreislauf gelangen. Beispielsweise können die Partikel aus Urschmutz stammen, resultierend aus der Komponentenherstellung (Bohrspäne aus der KW-Herstellung, Schweiß- Lötreste aus der Ölkühlerherstellung, Restschmutz einzelner Komponenten aus der Verpackung, usw.), bei Wartungsarbeiten (Ölwechsel) in den Ölkreislauf gelangen oder aus Verbrennungsrückständen (verklumpte, unverbrannte Kohlenwasserstoffverbindungen) oder Verschleißpartikeln (beispielsweise aus der Ölpumpe oder aus Kettenspannern).

Die Fremdkörper können um ein vielfaches größer als das Lagerspiel sein. Diese werden dann nicht einfach aus der Lagerschale ausgespült. Sie bewegen sich in Richtung des Ölstroms zum Ende der Ölaustrittsbohrung, wobei das Austreten des Fremdkörpers durch das Lager gehemmt wird. Somit werden diese über die empfindliche Gleitfläche gewogen und zerstören das Lager durch Riefenbildung.

Im Extremfall versucht der Fremdkörper das Lager im Bereich des geringsten Widerstands zu verlassen, d. h. im Bereich der Freilegung (größte Spaltweite), und wird infolge der Keilwirkung zwischen Welle und Freilegung von der Welle bis tief in belastete Bereiche des Lagers mitgerissen.

### Kurze Beschreibung der Erfindung

Es ist eine Aufgabe der vorliegenden Erfindung, die Empfindlichkeit eines geschmierten Lagers hinsichtlich der Einflüsse von Fremdpartikeln zu verringern.

Die Aufgabe wird mit einem Gleitlager nach Anspruch 1 gelöst.

Das erfindungsgemäße Gleitlager weist zumindest eine an der Gleitfläche ausgebildete Schmutzleitnut auf, die sich zumindest teilweise stärker in Umfangsrichtung der Lagerschale als in Axialrichtung einer darin gelagerten Welle erstreckt. Auch wenn im Folgenden von einer Schmutzleitnut die Rede ist, können mehrere Schmutzleitnuten vorgesehen sein. Die Neigung der Schmutzleitnut mit einer bevorzugten Erstreckung in Umgangsrichtung bewirkt einen effektiven Transport von Fremdpartikeln aufgrund der Ölflussrichtung und der Drehung einer in der Lagerschale gelagerten Welle. Aus diesem Grund ist die eine oder sind mehrere Schmutzleitnuten vorzugsweise in Drehrichtung eingearbeitet. Um den Schmutz effektiv aus dem Lager zu spülen und um eine Beschädigung des Lagers aufgrund von Fremdpartikeln zu vermeiden, erstreckt sich die Schmutzleitnut bis zu einem Rand des Lagers, d. h. bis zu einem der beiden Ränder in Axialrichtung einer im Lager gelagerten Welle, und ist am Rande offen. Die Schmutzpartikel, die von der Schmutzleitnut zum Rand transportiert werden, können somit nach außen abgegeben werden. Der so abgeführte Schmutz gelangt in den Ölsumpf und wird beim nächsten Umpumpzyklus, beispielsweise durch einen Filter, aus dem Ölstrom gefiltert. Die Schmutzleitnuten können durch Einprägung, Einstanzung, Eindrehung usw. in die Gleitfläche des geschmierten Gleitlagers eingebracht werden. Ferner können die Schmutzleitnuten hinsichtlich ihrer Länge, Breite, Tiefe, Geometrie und Lage variieren, wodurch eine Anpassung an eine Verteilung der Form und Größe von auftretenden Schmutzpartikeln vorgenommen werden kann. Bei den eingebrachten Schmutzleitnuten schädigen die Partikel allenfalls die Fläche bis zur nächstgelegenen Schmutzleitnut und werden dann von der Schmutzleitnut nach außen abtransportiert. Dadurch wird die geschädigte Fläche reduziert und die Ausfallwahrscheinlichkeit des Lagers drastisch gesenkt. Ferner hilft der sich in der Schmutzleitnut befindliche Schmierstoff bei hohen Mischreibungsanteilen (Körperkontaktreibung > Flüssigkeitsreibung) Temperaturen aus kritischen Zonen abzuführen und reduziert die Reibungszahl durch seine Schmierwirkung. Dieser Effekt kann einen Ausfall des Lagers durch thermisches Fressen reduzieren.

Erfindungsgemäß ist eine Mittelnut vorgesehen, die sich dadurch auszeichnet, dass sie keine axiale Komponente aufweist. Die Mittelnut kann umlaufend oder beidseitig geschlossen sein. Die Mittelnut kommuniziert ferner mit zumindest einer der Schmutzleitnuten. Durch die Mittelnut wird der Transport von Schmutzpartikeln in der Umlaufrichtung bewirkt, um die Schmutzpartikel zu einer Schmutzleitnut zu transportieren, die anschließend den Abtransport der Partikel vornimmt. Hierbei ist es bevorzugt, dass die Mittelnut die Fremdpartikel zunächst aus einem hoch belasteten Bereich des Lagers in weniger belastete Bereiche transportiert, beispielsweise in Freilegungsbereiche, die vorzugsweise vorgesehen sind, bevor die Schmutzpartikel nach außen abgegeben werden. Unter einem Freilegungsbereich versteht man einen Bereich an den Lagerenden einer Lagerschale, welche das Lager bilden, in dem die Wandstärke der Lagerschale im Vergleich zur Wandstärke der restlichen Lagerschale reduziert ist. Auf diese Weise kann der Verschleiß einer in der Lagerschale laufenden Welle aufgrund von Ungenauigkeiten an den Verbindungsstellen der beiden Lagerschalen verringert werden. Der Transport durch eine Mittelnut kann auch in die weniger belastete Deckelschale einer Lagerschale erfolgen, in der eine oder mehrere Schmutzleitnuten zum Abtransport vorgesehen sind. Es können mehrere Mittelnuten vorgesehen sein. Vorzugsweise verläuft die Mittelnut in der Mitte der Gleitfläche, d. h. auf der oben definierten Symmetrieachse.

Erfindungsgemäß sind zwei Paare von V-förmig angeordneten Schmutzleitnuten vorgesehen, die sich von einem gemeinsamen Ausgangspunkt im in axialer Richtung mittleren Bereich des Lagers in jeweils entgegengesetzter Richtung nach außen erstrecken, wobei die beiden Ausgangspunkte mit der Mittelnut verbunden sind. Die Schrägstellung ist vorzugsweise symmetrisch. Eine solche Anordnung ist beispielsweise für ein geschmiertes Gleitlager ohne definierte Drehrichtung geeignet, wenn die beiden Vs in Umlaufrichtung entgegengesetzt ausgebildet sind.

Die Schmutzleitnut ist bis zu 80 µm tief, um eine Aufnahme und einen Abtransport von Partikeln ohne übermäßige Minderung der Integrität der Gleitfläche zu ermöglichen. Aus demselben Grund ist die Schmutzleitnut vorzugsweise bis zu 150 µm breit. Selbstverständlich können mehrere Schmutzleitnuten diese oder andere Eigenschaften bevorzugter Ausgestaltungen aufweisen. Insbesondere können im Fall mehrerer Schmutzleitnuten unterschiedliche Abmessungen vorgesehen sein, um verschiedenen Verschmutzungsarten Rechnung zu tragen. Ferner kann eine Schmutzleitnut hinsichtlich ihrer

Breite und/oder Tiefe und/oder ihres Querschnitts entlang ihrer Erstreckung variieren.

Vorzugsweise sind zumindest zwei Schmutzleitnuten in Axialrichtung nebeneinander mit unterschiedlich ausgerichteter Schrägstellung ausgebildet. Hierbei können der Abstand, die Anzahl sowie der Winkel der Schmutzleitnuten variieren. Durch die schräge Anordnung der Schmutzleitnuten zur Wellenlaufrichtung wird der hydrodynamische Einfluss der Schmutzleitnuten gemindert. Aus diesem Grund und um eine einseitige Belastung zu vermeiden, ist eine symmetrische Anordnung der Nuten im Falle mehrerer Schmutzleitnuten bevorzugt. Als Symmetrieachse kommt hierbei insbesondere die Achse in Frage, die keine axiale Komponente aufweist und in der Mitte der Gleitfläche verläuft.

Vorzugsweise befinden sich die V-förmig angeordneten Schmutzleitnuten in niedrig belasteten Bereichen des Lagers, d. h. insbesondere in den Freilegungsbereichen, sofern vorhanden.

Vorzugsweise ist zumindest eine Schmutzleitnut gekrümmt, um den Einfluss der Nut auf die hydrodynamischen Eigenschaften des Lagers zu minimieren.

Vorzugsweise kreuzen sich zumindest zwei Schmutzleitnuten, wodurch ein Austausch von Schmutzpartikeln zwischen den Schmutzleitnuten erfolgen kann.

Vorzugsweise sind 10 bis 20 Schmutzleitnuten vorhanden, wodurch ein effektiverer Schmutzabtransport erzielt wird.

Vorzugsweise ist der Querschnitt einer Schmutzleitnut und/oder Mittelnut halbkreisförmig oder rechteckig.

Vorzugsweise ist das Gleitlager ein Pleuellager, bei dem eine hohe Ausfallsicherheit zu gewährleisten ist.

Vorzugsweise sind in einem bestimmten Bereich der Gleitfläche mehrere Schmutzleitnuten, insbesondere in Gruppen, mit unterschiedlich ausgerichteter Schrägstellung ausgebildet. Die Gruppierung kann beispielsweise im Hinblick auf die Belastungsverteilung auf der Gleitfläche oder den hydrodynamischen Einfluss der Nuten auf das Gleitlager erfolgen.

Das Einbringen der Schmutzleitnut kann durch Lasern, Prägen oder Rollieren erfolgen. Auf diese Weise wird die Gleitfläche mit nur geringem Mehraufwand profiliert. Zur Vereinfachung der Herstellung wird die Schmutzleitnut vorzugsweise im Rahmen eines abschließenden Bearbeitungsschrittes oder vor weiteren Beschichtungsprozessen ausgebildet.

Vorzugsweise wird die Schmutzleitnut unmittelbar in einer Gleitschicht der Gleitfläche ausgebildet, um die durch Riefenbildung geschädigte Fläche im Belastungsbereich des Lagers zu verringern. Die Strukturierung bei Dreistofflagern kann im letzten Arbeitsschritt oder vor weiteren Beschichtungsprozessen in den Substratwerkstoff (beispielsweise Bronze) eingebracht werden. Bei Zweistofflagern (beispielsweise Aluminium) wird die Schmutzleitnut vorzugsweise direkt in die Gleitschicht eingebracht.

Vorzugsweise werden nach der Ausbildung der Schmutzleitnut jegliche Aufwürfe und/oder Grate und/oder Stege in der

Umgebung der Schmutzleitnut entfernt, um die Güte der Gleitfläche zu verbessern.

### Kurze Beschreibung der Zeichnungen

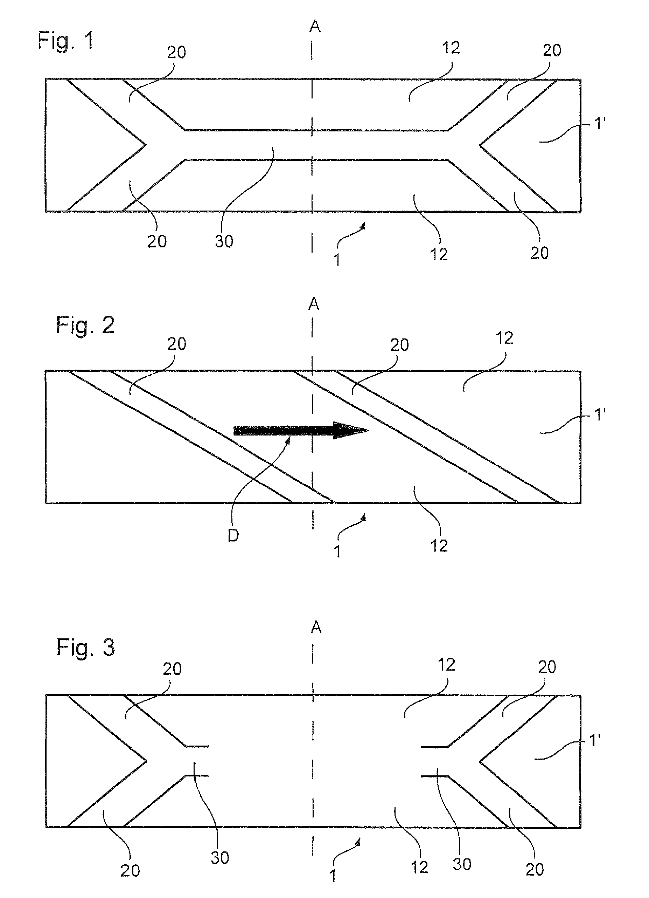

Die Figuren 1 bis 6 sind jeweils Draufsichten abgewickelter Gleitflächen von geschmierten Gleitlagern mit Schmutzleitnuten.

### Wege zur Ausführung der Erfindung

Die Figuren 1 bis 6 sind Draufsichten einer abgewickelten Gleitfläche 1' einer Lagerschale 1. In die Gleitfläche 1' sind Nuten 20 eingebracht, die als Schmutzleitnuten dienen, zum Transport von Fremdpartikeln nach außen.

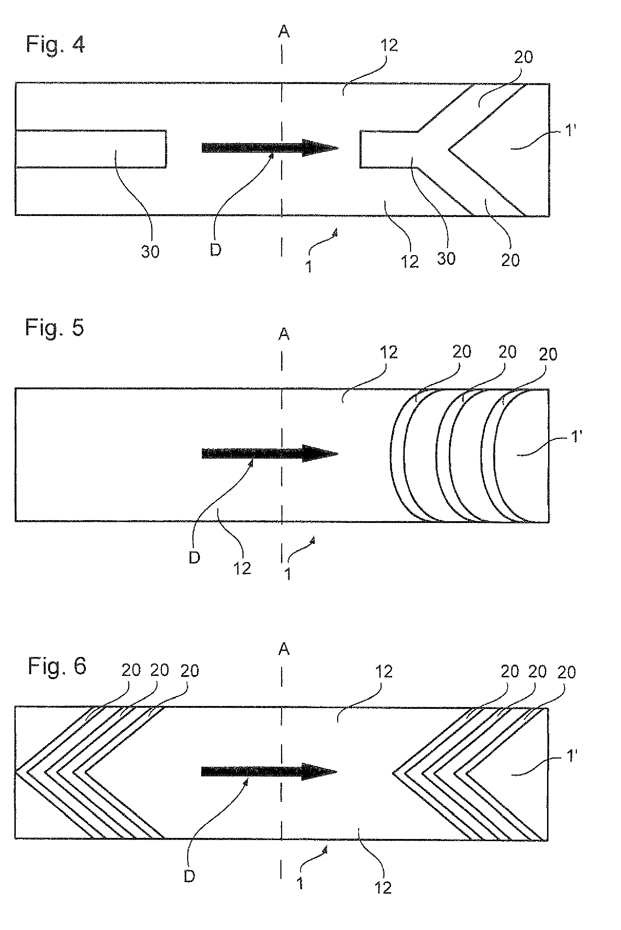

In den Figuren 1, 2, 3, 4 und 6 sind die Schmutzleitnuten 20 als gerade Nuten ausgebildet und in Umfangsrichtung der Lagerschale stärker geneigt als in axialer Richtung einer sich im Lager befindlichen Welle. Die axiale Richtung ist mit einer gestrichelten Linie A eingezeichnet. In der Figur 5 sind die Schmutzleitnuten 20 gekrümmt und zumindest in den Randbereichen 12 der Lagerschale 1 in Umfangsrichtung stärker geneigt als in axialer Richtung A.

In den gezeigten Projektionen fällt die Umlaufrichtung der Lagerschale mit der in den Figuren 2, 4, 5 und 6 eingezeichneten Drehrichtung D zusammen. In den Beispielen dieser Figuren ist die Anordnung der Schmutzleitnuten 20 von der Drehrichtung der Welle abhängig, wohingegen die Ausführungsbeispiele der Figuren 1 und 3 für eine Lagerschale ohne definierte Drehrichtung geeignet sind.

Die Schmutzleitnuten 20 tragen zur Profilierung der Gleitflächen 1' bei. Jeweils zwei Lagerschalen 1 bilden ein Lager, wobei gleiche oder unterschiedliche mit Schmutzleitnuten 20 profilierte Lagerschalen 1 zur Herstellung eines Lagers kombiniert werden können.

Die Schmutzleitnuten 20 gehen jeweils über den seitlichen Rand 12 der Lagerschale 1 hinaus um Schmutzpartikel, die sich zwischen der Lagerschale und der Welle befinden, nach außen abzuführen. In den Figuren 1 und 3 sind jeweils zwei Paar V-förmig angeordnete Schmutzleitnuten 20 symmetrisch zu einer Achse vorgesehen, die keine axiale Komponente aufweist und in der Mitte der Gleitfläche verläuft, d. h. sie fällt mit dem Pfeil D zusammen. In der Figur 4 ist eine V-förmige Anordnung von zwei Schmutzleitnuten 20 abgebildet.

In der Figur 1 sind die beiden Scheitelpunkte des Vs mit einer Mittelnut 30 verbunden, die sich in Umfangsrichtung der Lagerschale erstreckt, um ein rasches Zuführen von Schmutzpartikeln in die Schmutzleitnuten 20 zu gewährleisten. Ein Zuführen von Schmutzpartikeln durch eine Mittelnut 30 zum V ist auch in der Figur 3 unter Zuhilfenahme von zwei Mittelnuten 30 gezeigt. Eine weitere Anordnung mit Mittelnuten 30 ist in der Figur 4 gezeigt. In den Ausführungsbeispielen mit einer oder zwei Mittelnuten 30, sind die Mittelnuten 30 mit geschlossenen oder in Schmutzleitnuten 20 mündenden Enden ausgestaltet. Die Mittelnuten 30 können allerdings auch als durchgehende Umfangsnuten ausgebildet sein. Ferner können mehrere Mittelnuten 30 an unterschiedlichen axialen Positionen vorgesehen sein.

Eine V-förmige Anordnung von Schmutzleitnuten 20, die sich von den vorgenannten V-förmig angeordneten Schmutzleitnuten 20 unterscheidet, ist in Figur 6 gezeigt, worin V-Nuten gruppiert vorgesehen sind und insgesamt zwei Gruppen mit mehreren Schmutzleitnuten 20 in die Gleitfläche 1' eingebracht sind.

## Patentansprüche

1. Geschmiertes Gleitlager mit zumindest einer an der Gleitfläche (1') ausgebildeten Schmutzleitnut (20), die sich zumindest teilweise stärker in Umfangsrichtung der Lagerschale als in Axialrichtung (A) einer darin gelagerten Welle erstreckt, sich bis zu einem Rand (12) des Lagers erstreckt und am Rand offen ist, so dass Schmutzpartikel, die von der Schmutzleitnut (20) zum Rand (12) transportiert werden, nach außen abgegeben werden können, wobei
zusätzlich eine Mittelnut (30) vorgesehen ist, die keine axiale Komponente aufweist,
**dadurch gekennzeichnet, dass**
zwei Paare von V-förmig in Umfangsrichtung entgegengesetzt angeordneten Schmutzleitnuten (20) vorgesehen sind, die sich von einem gemeinsamen Ausgangspunkt im in axialer Richtung mittleren Bereich des Lagers in jeweils entgegengesetzter axialer Richtung nach außen erstrecken, wobei die beiden Ausgangspunkte mit der Mittelnut (30) verbunden sind und dass
die Schmutzleitnut (20) bis zu 80 µm tief ist.

2. Gleitlager nach Anspruch 1, **dadurch gekennzeichnet, dass** die Schmutzleitnut (20) bis zu 150 µm breit ist.

3. Gleitlager nach Anspruch 1 oder 2, **dadurch gekennzeichnet, dass** zumindest zwei Schmutzleitnuten (20) in Axialrichtung nebeneinander mit unterschiedlich ausgerichteter Schrägstellung ausgebildet sind.

4. Gleitlager nach einem der vorhergehenden Ansprüche, **dadurch gekennzeichnet, dass** zumindest eine Schmutzleitnut (20) gekrümmt ist.

5. Gleitlager nach einem der vorangehenden Ansprüche, **dadurch gekennzeichnet, dass** sich zumindest zwei Schmutzleitnuten (20) kreuzen.

6. Gleitlager nach einem der vorangehenden Ansprüche, **dadurch gekennzeichnet, dass** 10 bis 20 Schmutzleitnuten (20) vorhanden sind.

7. Pleuellager mit einem Gleitlager nach einem der vorangehenden Ansprüche.

## Claims

1. Lubricated plain bearing having at least one dirt-conducting groove (20) formed in the sliding surface (1'), which extends at least partially to a greater extent in the circumferential direction of the bearing shell than in the axial direction (A) of a shaft mounted therein, extends as far as an edge (12) of the bearing and is open at the edge, so that dirt particles which are transported by the dirt-conducting groove (20) to the edge (12) can be discharged to the outside, wherein a centre groove (30) which has no axial component being provided in addition, **characterised in that** two pairs of dirt-conducting grooves (20) arranged counter to each other in a V shape in the circumferential direction are provided, which extend from a common starting point in the region of the bearing which is central in the axial direction, outwardly in opposite axial directions, the two starting points being joined to the centre groove (30), and **in that** the dirt-conducting groove (20) is up to 80 µm deep.

2. Plain bearing according to claim 1, **characterised in that** the dirt-conducting groove (20) is up to 150 µm wide.

3. Plain bearing according to claim 1 or 2, **characterised in that** at least two dirt-conducting grooves (20) are formed adjacent to each other in the axial direction, sloping in different directions.

4. Plain bearing according to any of the preceding claims, **characterised in that** at least one dirt-conducting groove (20) is curved.

5. Plain bearing according to any of the preceding claims, **characterised in that** at least two dirt-conducting grooves (20) intersect each other.

6. Plain bearing according to any of the preceding claims, **characterised in that** there are 10 to 20 dirt-conducting grooves (20).

7. Connecting-rod bearing having a plain bearing according to any of the preceding claims.

## Revendications

1. Palier lisse lubrifié, comportant au moins une rainure de guidage des salissures (20), qui est réalisée sur la surface de glissement (1'), s'étend au moins en partie de manière plus marquée dans le sens circonférentiel de la coquille de coussinet que dans le sens axial (A) d'un arbre monté dans celle-ci, s'étend jusqu'à un bord (12) du palier et est ouverte sur le bord de manière à pouvoir évacuer vers l'extérieur des particules de salissures qui sont transportées par la rainure de guidage des salissures (20) vers le bord (12),
une rainure centrale (30) étant prévue en plus, laquelle ne comporte pas de composante axiale,
**caractérisé en ce qu'**
il est prévu deux paires de rainures de guidage des salissures (20), qui sont disposées en forme de V en sens opposé dans le sens circonférentiel et qui s'étendent vers l'extérieur chacune en sens opposé dans le sens axial à partir d'un point de départ commun dans la zone médiane du palier dans le sens axial, les deux points de départ étant reliés à la rainure centrale (30) et **en ce que**
la rainure de guidage des salissures (20) a une profondeur allant jusqu'à 80 µm .

2. Palier lisse selon là revendication 1, **caractérisé en ce que** la rainure de guidage des salissures (20) a une largeur allant jusqu'à 150 µm.

3. Palier lisse selon la revendication 1 ou 2, **caractérisé en ce qu'**au moins deux rainures de guidage des salissures (20) sont réalisées côte à côte dans le sens axial avec un positionnement en oblique orienté différemment.

4. Palier lisse selon l'une quelconque des revendications précédentes, **caractérisé en ce qu'**au moins une rainure de guidage des salissures (20) est courbe.

5. Palier lisse selon l'une quelconque des revendications précédentes, **caractérisé en ce qu'**au moins deux rainures de guidage des salissures (20) se croisent.

6. Palier lisse selon l'une quelconque des revendications précédentes, **caractérisé en ce qu'**il est prévu 10 à 20 rainures de guidage des salissures (20).

7. Coussinet de bielle avec un palier lisse selon l'une des revendications précédentes.
